# NEUE EUROPÄISCHE PATENTSCHRIFT

(11) **EP 0 846 092 B2**
(45) Veröffentlichungstag und Bekanntmachung des Hinweises auf die Entscheidung über den Einspruch: **21.06.2006**
(45) Hinweis auf die Patenterteilung: 30.08.2000
(21) Anmeldenummer: 97928195.3
(22) Anmeldetag: 13.06.1997
(51) Int. Cl.: C04B 41/87, C04B 33/34

(54) **WÄSSRIGE RUTHENIUMCHLORIDLÖSUNG ZUM SCHWARZFÄRBEN VON KERAMIKOBERFLÄCHEN**
AQUEOUS RUTHENIUM CHLORIDE SOLUTION FOR BLACKENING CERAMIC SURFACES
SOLUTION AQUEUSE DE CHLORURE DE RUTHENIUM PERMETTANT DE NOIRCIR LES SURFACES CERAMIQUES

(30) Priorität: 24.06.1996 DE 19625236
(43) Veröffentlichungstag der Anmeldung: 10.06.1998
(73) Patentinhaber: BK Giulini GmbH, 67065 Ludwigshafen (DE)
(72) Erfinder: KLEIN, Thomas, D-69121 Heidelberg (DE); STAFFEL, Thomas, D-67269 Grünstadt (DE); FISCHER, Lysander, D-69231 Rauenberg (DE)
(74) Vertreter: Wagner, Jutta
(86) Internationale Anmeldenummer: PCT/EP1997/003087
(87) Internationale Veröffentlichungsnummer: WO 1997/049650

(56) Entgegenhaltungen:
- EP-A- 0 704 411
- CH-B- 575 894
- DE-A- 2 012 304
- CHEMICAL ABSTRACTS, vol. 109, no. 20, 14.November 1988 Columbus, Ohio, US; abstract no. 175319, TROJAN, MIROSLAV ET AL: "Ruthenium oxide-containing gray-black zirconium silicate pigments for glazes" XP002042983 in der Anmeldung erwähnt & CS 248 541 A (CZECH.) 16.Mai 1988
- P. Pascal, Nouveau Traité de Chimie Minerale 1958, S.117, 124-125
- Gmelinns Handbuch System Nr. 63, 1970, S. 84-85, 211, 322-325
- Dr. Lange, Applicanos Report 10e, Fundamentals of Colonmetry
- F. Seel, Grundlages der Analystisches Chemie 1963, S. 270-273
- Jander - Jahr, "Massanalyse", 14.Auflage, Walter de Gruyter, Berlin, New York, 1986, Seiten 92-94
- A.W. Mond, "The Acetates of Ruthenium", J. Chem. Soc. 1930, Seiten 1247-1249.
- T.A. Stephenson und G. Wilkinson, J. Inorg. Nucl. Chemistry, 1966, vol. 28, Seiten 2285-2291
- Sicherheitsdatenblatt (Scheda di Sicurezza) Metcolour P100, datiert 14.Januar 1995
- Hollemann - Wiberg, "Lehrbuch der Anorganischen Chemie", 91 - 100- Aufl., de Gruyter, Berlin - New York, 1985, Seiten 196-198.

## Beschreibung

Die vorliegende Erfindung betrifft Mischungen zum Schwarzfärben von keramischen Produkten unter Verwendung von wäßrigen Lösungen von Ruthoniurnverbindungen.

Es ist bekannt, daß Ruthenlumchlorid in wäßriger Lösung verwendet werden kann, um Porzellan gräuschwarz zu färben. Dabei wird eine stark saure, wäßrige Lösung des Rutheniumchlorids auf den Scherben aufgetragen und eingebrannt, wobei sich das Chlorid zersetzt und das Rutheniumoxid in allerfeinster Form zurückbleibt und sich mit der Kieselsäure bzw. Tonerde der Scherben unter Bildung der Farbpigmente verbindet (vgl. Ullmann, Enzyklopädie der technischen Chemie, 2. Auflage, Band 4. Seite 837 und 838).

Aus der tschechischen Patentanmeldung CS 248 541 B1 ist bekannt, daß Rutheniumoxid in Zirkonsilikat-Kristaltgittern eine grauschwarze Farbe ergibt, so daß solche Verbindungen als Schwarzpigmente verwendet werden können.

In der EP 0 704 411 A1 wird femer beschrieben, daß Rutheniumsalz oder -komplexe mit Polycarbonsäuren eine dunkle Graufärbung ergeben (als "schwarz" bezeichnet), wenn die Auftragung auf den Keramikscherben erfolgt, indem dieser zunächst mit Wasser vorbehandelt (aktiviert), danach mit der Rutheniumlösung gefärbt und anschließend mit Wasser nachbehandelt wird. Auch dieses Verfahren führt jedoch nur zu vergleichsweise dunklen, nicht jedoch wirklich schwarzen Färbungen.

Es stellte sich daher die Aufgabe, Mittel zu finden, mit denen Keramikoberflächen einfach und wirtschaftlich tiefschwarz gefärbt werden können.

Diese Aufgabe wird durch die Merkmale des Hauptanspruchs gelöst und durch die Merkmale der Unteransprüche gefördert.

Die erfindungsgemäßen Lösungen bestehen aus einerwäßrigen Lösung handelsüblicher Rutheniumchlorids, weiche üblicherweise zur Stabilisierung einen gewissen Überschuß der Mineralsäure enthalten. Diese wäßrige Lösung wird mit Natrium- und/oder Kaliumacetat auf einen pH-Wert von mindesters 1.5, insbesondere > 2, abgepuffert, wobei auch über längere Zeit stabile Lösungen erhalten werden.

Die Lösung wird dabei auf eine Ruthenium-Konzentration von 0,1 - 10 Gew.-% eingestellt, zur Abpufferung sind je nach Mineralsäureüberschuß entsprechend große Mengen beispielsweise von Natriumacetat erforderlich, üblicherweise werden ebenfalls Konzentrationen in der Größenordnung von 0,1 -10 Gew.-% angewendet.

Die erfindungsgemäßen Lösungen werden in üblicher Weise durch Sprühen, Tauchen, Malen, Drucken usw. auf die zu färbenden Keramikkörper aufgetragen, wobei Mengen von 0,1 - 5 g/m² Oberfläche für die Farbgebung ausreichend sind.

Nach dem Trocknen werden die Keramikkörper in einem geeigneten Ofen bei einer Temperatur zwischen 1300 und 1400°C gebrannt. Für die Zersetzung der Rutheniumverbindungen sind Temperaturen von 800 - 1200°C, insbesondere 1140°C, bevorzugt. Die Brenndauer beträgt zwischen einer halben und 5 Stunden, vorzugsweise zwischen 1 und 2 Stunden. Während dieser Zeit werden die Rutheniumverbindungen pyrolisiert und Rutheniumdioxid in fein verteilter Form gebildet. Durch geeignete Mineralisatoren wie Alkalifluoride und -chloride, Fluorosilikate u. s. w. sowie durch den Zusatz von Molybdän- oder Wolframverbindungen kann in bekannter Weise der Farbeindruck gefördert werden.

Der nach dem Brennen erhaltene Farbeindruck wird objektiv mit Hilfe eines La*b*-Systems bestimmt. In diesem System steht "L" für die Helligkeit, während "a" und *b*" sowohl den Farbton als auch die Farbsättigung angeben. "a*" bezeichnet dabei die Position auf einer Rot-Grün-Achse, und "b*" die Position auf einer Gelb-Blau-Achse.

Es konnte bisher nicht festgestellt werden, worauf die wesentliche Farbvertiefung der erfindungsgemäßen gepufferten Systeme gegenüber ungepufferten Systemen beruht. Mögliche Erklärungen könnten sein, daß die Partikelform und/oder -größe der abgeschiedenen Rutheniumoxide aus der gepufferten Lösung sich von der der ungepufferten Lösung unterscheidet. Eine andere Möglichkeit könnte sein, daß beim Abdampfen der ungepufferten Mineralsäuren während der Pyrolyse eine gewisse Aufrauhung der Keramikoberflächen erfolg, welche eine zusätzliche Lichtstreuung und damit einen "Grauton" bewirkt. Andererseits scheint auch die Mineralsäure einen wichtigen Einfluß zu besitzen und nicht nur der pH-Wert der Lösung von Ausschlag zu sein, da die beispielsweise aus der obigen EP 0 704 411 bekannten Rutheniumkomplexe mit organischen Polycarbonsäuren wie Polyacrylaten oder Vinylethercopolymerisaten mit Maleinsäure zwar ebenfalls bei pH-Werten von ≥ 2 stabile Komplexe ergeben, aber beim Brennen nur zu dunkelgrauen Färbungen führen. Es ist daher denkbar, daß beim Brennen aus Natriumacetat und Chlorid Natriumchlorid gebildet wird, welches als Mineralisator für die Farbbildung verantwortlich ist.

Die erfindungsgemäßen wäßrigen Lösungen dringen in die Oberfläche der Keramikscherben 0,5 bis 2 mm tief ein, wobei die Eindringtiefe zusätzlich noch in bekannter Weise durch viskositätsregulierende Mittel wie Glycerin, Glucomannan, Zucker oder anderes beeinflußt werden kann und ergeben anschließend beim Brennen eine entsprechend tief durchgefärbte Oberschicht. Die organische Substanz wird zu CO₂ und H₂O verbrannt. Unebenheiten und Rauhigkeiten der Oberfläche können ebenfalls in bekannter Weise anschließend durch Schleifen egalisiert werden, solange nicht mehr abgeschliffen wird, als der Eindringtiefe der Färbelösungen entspricht. Die Lösung selbst verläuft beim Auftragen vergleichsweise wenig, so daß insbesondere auch ein konturönscharfes Drucken z. B. im Siebdruckverfahren möglich ist. Mit bekannten Färbelösungen anderer Färbungen lassen sich auf diese Art und Weise auch zusammengesetzte dekorative Muster erzeugen.

Die folgenden Beispiele beschreiben das erfindungsgemäße Verfahren näher, ohne es beschränken zu sollen.

### Beispiel 1

Rutheniumchloridiösung wird mit Natriumacetat auf pH 2 abgepuffert und auf 6 Gew.-% Ru eingestellt

Weiße Keramikfliesen mit 5 x 5 cm Kantenlänge werden mittels eines Zerstäubers mit dieser Lösung auf der Oberseite eingesprüht, bis das Plattengewicht um 0,2 g zugenommen hat Die Fliesen werden danach im Trockenschrank bei 100°C getrocknet und anschließend in den Brennofen überführt, wo sie 6 Stunden bei 600°C gehalten werden, bevor die Temperatur innerhalb einer Stunde auf 1140°C erhöht und eine weitere Stunde bei dieser Temperatur gehalten wird, bevor die Platten langsam wieder abgekühlt werden. Die Oberflächen der Platten werden danach glatt geschliffen.

Nach dem oben beschriebenen Brennverfahren erhält man folgende Farbwerte auf den Fliesenoberflächen:

| | L* | a* | b* |
|---|---|---|---|
| V & B-Fliese Versuch Nr. 1 | 38,26 | -2,42 | -2,64 |
| V & B-Fliese Versuch Nr. 2 | 36,97 | -2,05 | -3,18 |
| V & B-Fliese Blindprobe | 75,34 | 5,84 | 10,03 |

### Beispiel 2

Rutheniumchloridlösung wird mit Natriumacetat auf pH 1,5 abgepuffert und auf 6 Gew.-% Ru eingestellt

Nach dem oben beschriebenen Auftrags- und Brennverfahren erhält man folgende Farbwerte auf den Fliesenoberflächen:

| | L* | a* | b* |
|---|---|---|---|
| V & B-Fliese Versuch Nr. 3 | 31,64 | -1,26 | -4,37 |
| V & B-Fliese Versuch Nr. 4 | 32,13 | -1,41 | -4,15 |
| V & B-Fliese Versuch Nr. 5 | 31,31 | -1,01 | -4,64 |
| V & B-Fliese Blindprobe | 75,34 | 5,84 | 10,03 |

## Patentansprüche

1. Wäßrige Rutheniumchloridlösung zum Schwarzfärben von Keramikobernächen, **dadurch gekennzeichnet, daß** sie mit Natrium- und/oder Kaliumacetat auf einen pH-Wert von mindestens 1,5 abgepuffert ist.

2. Lösung gemäß Anspruch 1, **dadurch gekennzeichnet, daß** die Lösung auf einen pH-Wert von über 2,0 abgepuffert ist.

3. Lösung gemäß Anspruch 1 oder 2, **dadurch gekennzeichnet, daß** die Rutheniumsalzkonzentration 0,1 - 10 Gew.-%, vorzugsweise 1 - 5 Gew.%, beträgt.

4. Lösung gemäß einem der Anspruche 1 bis 3, **dadurch gekennzeichnet, daß** die Lösung zusätzlich Verdickungsmittel enthält.

5. Verfahren zum Färben von Keramikoberflächen, **dadurch gekennzeichnet, daß** man eine Lösung gemäß einem der Ansprüche 1 - 4 durch Sprühen, Tauchen, Malen oder Drucken aufträgt, trocknet und bei einer Temperatur von 300 - 1400°C, vorzugsweise 800 - 1200°C, insbesondere 1140°C eine halbe bis fünf Stunden, vorzugsweise 1 - 2 Stunden, brennt und die Oberfläche der Keramikscherbe durch Schleifen egalisiert und poliert.

6. Verfahren gemäß Anspruch 5, **dadurch gekennzeichnet, daß** die Oberfläche des Scherben s vordem Aufbringen der Lösung mit Wasser besprüht und aktiviert wird.

7. Verfahren gemäß Anspruch 5 oder 6, **dadurch gekennzeichnet, daß** die Eindringtiefe der Lösungen durch Nachbehandlung mit Wasser erhöht wird, bevor der Scherben getrocknet und gebrannt wird.

## Claims

1. An aqueous ruthenium chloride solution for blackening ceramic surfaces, **characterised in that** it is buffered with sodium and/or potassium acetate to a pH value of at least 1.5.

2. A solution according to claim 1, **characterised in that** the solution is buffered to a pH value of greater than 2.0.

3. A solution according to claim 1 or 2, **characterised in that** the ruthenium salt concentration is 0.1 to 10 wt.-%, preferably 1-5 wt.-%.

4. A solution according to one of claims 1 to 3, **characterised in that** the solution additionally contains thickening agents.

5. A process for colouring ceramic surfaces,
**characterised in that** a solution according to one of claims 1-4 is applied by spraying, dipping, painting or printing, is then dried and is baked at a temperature of 300° C to 1400° C, preferably 800° C to 1200° C, for half an hour to five hours, preferably 1-2 hours, and the surface of the ceramic piece is then levelled by grinding and polished.

6. A process according to claim 5, **characterised in that** the surface of the piece is sprayed with water and activated before the solution is applied.

7. A process according to claim 5 or 6, **characterised in that** the depth of penetration of the solutions is increased by subsequent treatment with water before the piece is dried and baked.

## Revendications

1. Solution aqueuse de chlorure de ruthénium pour le noircissement des surfaces céramiques, **caractérisée en ce qu'**elle est tamponnée à un pH d'au moins 1,5, à l'aide d'acétate de sodium et/ou de potassium.

2. Solution selon la revendication 1, **caractérisée en ce que** la solution est tamponnée à un pH supérieur à 2,0.

3. Solution selon la revendication 1 ou 2, **caractérisée en ce que** la concentration du sel de ruthénium atteint 0,1 à 10 % en poids, de préférence 1 à 5% en poids.

4. Solution selon une des revendications 1 à 3, **caractérisée en ce qu'**elle renferme en plus des agents épaississants.

5. Procédé pour la coloration des surfaces céramiques, **caractérisé en ce que** l'on applique une solution selon une des revendications 1 à 4, par pulvérisation, immersion, peinture ou impression, on la sèche et on la cuit à une température de 300 à 1400 °C, de préférence de 800 à 1200 °C et en particulier, de 1140 °C, pendant une demi-heure à cinq heures, de préférence pendant 1 à 2 heures, et on égalise et polit la surface de l'article en céramique par frottement.

6. Procédé selon la revendication 5. **caractérisé en ce que** la surface de l'article en céramique est pulvérisée et activée avec de l'eau avant l'application de la solution.

7. Procédé selon la revendication 5 ou 6, **caractérisé en ce que** la profondeur de pénétration des solutions est augmentée par un traitement postérieur à l'eau, avant que l'article ne soit séché et cuit.
